# EUROPEAN PATENT APPLICATION

(11) **EP 4 779 457 A1**
(43) Date of publication of application: **22.07.2026**
(21) Application number: 25152579.6
(22) Date of filing: 17.01.2025
(51) Int. Cl.: G06F 7/544, G06F 7/58

(54) **METHOD AND SYSTEM FOR DETERMINING A THRESHOLD VALUE AMONG A PLURALITY OF STATES OF A SYSTEM**

(71) Applicant: ScenarioX SA, 1204 Genève (CH)
(72) Inventor: DRI, Emanuele, 10141 Torino (IT); EXPOSITO, Ivan Diego, 1216 Cointrin (CH); KUASSIVI, Ahlin Situ Cédric, 1213 Petit Lancy (CH); VETRIVELAN, Muthumanimaran, 411007 Maharastra (IN); YOMI KWANDJEU, Achille, 1255 Veyrier (CH)
(74) Representative: Hautier IP

(57) **Abstract**

A method for determining a threshold value in a system, using both classical and quantum computing. The method involves setting initial conditions, generating quantum-random numbers, simulating the time evolution of the system's state, and determining the threshold value based on a given criterion and a distribution of final states. The simulation is partitioned into subsets for efficient computation, and the threshold value is calculated from the resulting manifolds.

## Description

The present invention relates to field of Quantum computing, and more specifically, to system and methods for prediction and simulation.

### BACKGROUND

The current state-of-the-art in the field of information processing involves the utilization of classical pseudo-random number generators to produce sequences of numbers that are pseudo-random. Indeed, they are based on very large table of numbers and therefore are not really random but look like random.

In the field of prediction and simulation, using random numbers is key. Therefore, when these numbers are not completely random, the quality of the predictions, as well as of the simulation, is reduced.

Thanks to physical processes, new random number generators exist. These generators rely on unpredictable quantum phenomena that are intrinsically random. These quantum random number generators (QRNG) leverage the inherent uncertainty principle in quantum mechanics to generate truly random numbers. The process involves, for example, initializing a quantum system in a superposition state, measuring it, and observing the collapse of the wave function into an eigenstate, resulting in a random outcome.

Despite the advantages offered by QRNGs, there exists a gap in the art regarding the application of these quantum-generated random numbers to simulate and predict states of systems.

It is therefore an objective of the present invention to overcome, at least partially, the above-mentioned disadvantages of the prior art by developing a novel method that combines the principles of quantum mechanics and information processing to apply them in the field of simulation and prediction.

### SUMMARY

The present invention has been designed to overcome at least some drawbacks present in prior art solutions.

According to an aspect, the present invention refers to a method for determining at least one threshold value among a plurality of states of at least one system, said threshold value delimiting a first set of states from a second set of states of the system based on a given timeframe and on a given criterion, the method being configured to be implemented by at least one computerized system comprising at least one classical information processing module and at least one quantum random number generation module, the method comprising:
a. Setting, using at least one processing module, initial conditions of at least one system;
b. Acquiring at least one set of quantum-generated random numbers, using a communication module, by at least:
   i. Generating, using the classical information processing module and at least one quantum random number generation module, a plurality of quantum-generated random numbers, by at least:
      - Initiating at least one quantum process using the classical information processing module and the quantum random number generation module, said quantum random number generation module comprising at least one output configured to provide a stream of random data generated by the quantum process;
      - Measuring at least one stream of random data from said output of this quantum random number generation module using a measurement module;
      - Post-processing, using the classical information processing module, the stream of random data to convert the stream of random data into plurality of quantum-generated random numbers;
      - Storing the quantum-generated random numbers in at least one storing module;
   ii. Selecting, using the processing module, the set of quantum-generated random numbers;
c. Simulating, using the processing module and the set of quantum-generated random numbers, the time evolution of the initial state of the system to obtain at least one plurality of final states of the system, the simulating step comprising at least:
   i. Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
   ii. For each subset of the predetermined number of subsets of quantum-generated random numbers, creating at least one trajectory of the evolution of the state of the system from its initial state to at least one final state over a given timeframe;
d. Obtaining, using the classical information processing module, a distribution of a plurality of final states according to at least one first axis by organizing the plurality of final states based on predetermined rules, said distribution defining a global manifold of n dimensions, n being equal or greater than 1;
e. Determining, using the classical information processing module, at least one threshold value among the plurality of final states, said threshold value delimiting a first set of final states from a second set of final states, the determining step comprising:
   i. Setting a given criterion;
   ii. Calculating a first manifold of n+1 dimension based on said given criterion under the manifold of n dimension, said first manifold corresponding to said first set of final states, said first manifold being a part of a global manifold of n+1 dimensions;
   iii. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
   iv. Computing the at least one threshold value on at least the first axis, this threshold value corresponding to at least one intersection of the first axis with the another manifold of n dimensions.

According to another aspect, the present invention relates to a computer product program for determining at least one threshold value among a plurality of states of at least one system which, when executed by at least one processing unit, executes the method according to the present invention.

According to another aspect, the present invention refers to a non-transitory computer readable medium comprising at least one computer program product according to the present invention.

According to another aspect, the present invention refers to A computerized system configured to determine at least one threshold value among a plurality of states of at least one system, said threshold value delimiting a first set of states from a second set of states of the system based on a given timeframe and on a given criterion, the computerized system comprising at least:
a. A classical information processing module configured to:
   i. Set initial conditions of at least one system;
   ii. Cooperate with at least one quantum random number generation module to generate a plurality of quantum-generated random numbers by:
      - Initiating at least one quantum process
      - Post-processing the stream of random data to convert the stream of random data into plurality of quantum-generated random numbers;
   iii. Select a set of quantum-generated random numbers
   iv. Simulate, using the set of quantum-generated random numbers, the time evolution of the initial state of the system to obtain at least one plurality of final states of the system, by:
      - Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
      - For each subset of the predetermined number of subsets of quantum-generated random numbers, creating at least one trajectory of the evolution of the state of the system from its initial state to at least one final state over a given timeframe
   v. Obtain a distribution of a plurality of final states according to at least one first axis by organizing the plurality of final states based on predetermined rules, said distribution defining a global manifold of n dimensions, n being equal or greater than 1;
   vi. Determine at least one threshold value among the plurality of final states, said threshold value delimiting a first set of final states from a second set of final states, by:
      - Setting a given criterion;
      - Calculating a first manifold of n+1 dimension based on said given criterion under the manifold of n dimension, said first manifold corresponding to said first set of final states, said first manifold being a part of a global manifold of n+1 dimensions;
      - Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
      - Computing the at least one threshold value on at least the first axis, this threshold value corresponding to at least one intersection of the first axis with the another manifold of n dimensions
b. The quantum random number generation module configured to:
   i. Cooperate with the classical information processing module to generate the plurality of quantum-generated random numbers by:
      - Initiating the quantum process, the quantum module comprising at least one output configured to provide a stream of random data generated by the quantum process;
c. A measurement module configured to:
   i. Measure at least one stream of random data from the output of the quantum module;
d. A communication module configured to:
   i. Acquire the set of quantum-generated random numbers;
e. A storing module configured to:
   i. Store the quantum-generated random numbers

According to another aspect, the present invention relates to a method for determining a value at risk for a given portfolio based on a given timeframe, the method being configured to be implemented by at least one computerized system comprising at least one classical information processing module and at least one quantum random number generation module, the method comprising:
a. Setting initial conditions of at least one portfolio, the initial conditions comprising a set of parameters taken among at least:
   i. For credit portfolio:
      - Probability of default (PD) for each counterparty;
      - Loss given default (LGD) for each counterparty;
      - Exposure at default (EAD) for each counterparty;
      - Losses based on multiplication of these 3 elements;
   ii. For equities or stocks:
      - Number of shares held for each security;
      - Current market price per share for each security;
      - Historical price data for each security;
      - Volatility or standard deviation of price movements for each security;
      - Dividend yield and payment schedule for each security;
      - Bid-ask spread for each security;
      - Market risk for each security;
      - Specific risk related to individual company factors for each security;
   iii. For derivatives:
      - Type of derivative instrument;
      - Underlying asset or security;
      - Strike price;
      - Expiration date;
      - Premium paid;
      - Delta and gamma values;
      - Implied volatility;
      - Time to expiration;
      - Interest rates;
      - Dividend adjustments;
      - Counterparty risk;
      - Market risk for the derivative instrument.
b. Acquiring at least one set of quantum-generated random numbers, using a communication module, comprising:
   i. Generating, using the classical information processing module and at least one quantum random number generation module, a plurality of quantum-generated random numbers, by at least:
      - Initiating at least one quantum process using the classical information processing module and the quantum random number generation module, said quantum random number generation module comprising at least one output configured to provide a stream of random data generated by the quantum process;
      - Measuring at least one stream of random data from said output of this quantum random number generation module using a measurement module;
      - Post-processing, using the classical information processing module, the stream of random data to convert the stream of random data into plurality of quantum-generated random numbers;
      - Storing the quantum-generated random numbers in at least one storing module;
   ii. Selecting, using the processing module, the set of quantum-generated random numbers;
c. Simulating, using the processing module and the set of quantum-generated random numbers, the time evolution of the initial state of the portfolio to obtain a plurality of final states of the portfolio, comprising:
   i. Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
   ii. For each subset of the predetermined number of subsets of quantum-generated random numbers, creating at least one trajectory of the evolution of the state of the portfolio from its initial state to at least one final state over a given timeframe;
d. Obtaining, using the classical information processing module, a distribution of a plurality of final states according to at least one first axis by organizing the plurality of final states based on predetermined rules, said distribution defining a global manifold of n dimensions, n being equal or greater than 1;
e. Determining, using the classical information processing module, at least one value at risk among the plurality of final states, said value at risk delimiting a first set of final states from a second set of final states, the determining step comprising:
   i. Setting a given criterion;
   ii. Calculating a first manifold of n+1 dimension based on said given criterion under the manifold of n dimension, said first manifold corresponding to said first set of final states, said first manifold being a part of a global manifold of n+1 dimensions;
   iii. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
   iv. Computing the at least one value at risk on at least the first axis, this value at risk corresponding to at least one intersection of the first axis with the another manifold of n dimensions.

Before providing below a detailed review of embodiments of the invention, some optional characteristics that may be used in association or alternatively will be listed hereinafter:
According to an example, n is equal to 1, and the distribution of the plurality of final states defines a curve and the first manifold defines a surface under said curve, and the another manifold defines a line.

According to an example, n is equal to 2, and the distribution of the plurality of final states defines a surface and the first manifold defines a volume under said surface, and the another manifold defines a surface.

According to an example, the step of simulating the time evolution of the initial state of the system comprises at least the following sub-steps:
a. Defining at least a plurality of parameters by:
   i. Setting at least an initial value S₀ for at least one quantity being simulated;
   ii. Defining at least one growth rate r, preferably constant, configured to represent the expected tendency of change of the quantity being simulated over time;
   iii. Defining a volatility σ configured to represent the degree of fluctuation in the process;
   iv. Setting a time horizon T for the simulation;
   v. Defining a number N of steps corresponding to the number of time intervals to calculate the simulation at regular intervals;
   vi. Selecting a number M of simulations corresponding to the number of independent paths to simulate;

This plurality of parameters are configured to mathematically simulate the evolution of the quantity according to the following stochastic differential first equation: dSt = St * (r*dt + *σ* * dWt) where Wt represents random shocks through a Wiener process, and the following second equation: S_{t+Δt} = St * exp((r - 0.5*σ*₂) Δt + σΔt^{1/2}Z) configured to discretize the first equation to simulate changes over predetermined time intervals Δt, and where Z is a standard normal random variable, introducing randomness at each time step using the set of quantum-generated random number;
b. Generating M Random Paths, each random path representing a unique possible outcome of the quantity's evolution, and for each generation of a random path:
   i. Starting from the initial value S₀;
   ii. Iterating over N time steps.
   iii. At each step, generating a new random value Z using at least one quantum-generated random number form the set of quantum-generated random numbers,
   iv. Applying the new random value Z to the second equation to calculate an updated value St;
   v. Recording the updated value St at each interval until reaching the end of the time horizon T.
c. Calculating average values and/or other statistical measures across all random paths at predetermined points in time over the time horizon T.

According to an example, the present invention comprises:
a. computing the average values and/or other statistical measures across all random paths at predetermined points in time over the time horizon T to generate at least one probability distribution and/or at least one plurality of probabilities, each probability of the plurality of probabilities corresponding to a specific scenario; and
b. aggregating at least a plurality of results across the different random paths to obtain probabilistic data, said probabilistic data comprising at least one among: a mean, a median, a variance, or probability distributions over time.

According to an example, the system is a neural network, the given criterion is a level of confidence and the step of determining the threshold value comprises the following steps:
a. Generating a set of input-output pairs based on the plurality of final states and the threshold value, with the input being the initial state of the system and the output being the corresponding final state that falls on either side of the threshold value;
b. Using another set of quantum-generated random numbers to introduce noise into the input-output pairs, creating a perturbed dataset;
c. Training at least one neural network using the perturbed dataset and the original dataset, to minimize the error between the neural network's output and the desired output for both datasets, the desired output corresponding to the threshold value;
d. Evaluating the performance of the neural network on a test dataset to assess its ability to generalize to new data.

According to an example, the system is a mechanical structure, the given criterion is a safety margin, the first set of final states correspond to the mechanical structure remaining stable and the determining step further comprises evaluating the structural stability of the mechanical structure under various loading conditions and comparing the results to the threshold value.

According to an example, the system is an image recognition system, the final states correspond to output classes in the image recognition system, the threshold value delimits a first set of output classes from a second set of output classes based on a given criterion, the given criterion being the presence of a predetermined anomaly, and the determining step comprises evaluating the performance of the image recognition system using a separate test dataset to assess its ability to generalize to new data.

According to an example, the at least one system is a parameter of a climate system, the given criterion for determining the threshold value is based on a predefined temperature threshold or a predefined rate of change in temperature.

According to an example, the quantum process comprises a transformation of at least one quantum state through a specific set of operations, and the quantum process is taken among at least:
a. Quantum coin flip process using at least one qubit;
b. Quantum measurement process on an entangled qubit system.

According to an example, the quantum process comprises a transformation of at least one quantum state through a specific set of operations.

According to an example, the quantum process is taken among at least:
a. Quantum coin flip process using at least one qubit;
b. Quantum measurement process on an entangled qubit system.

According to an example, the step of setting initial conditions of the system comprises defining a set of key variables related to an initial state of the system, and attributing at least one value to each variable of the set of key variables.

According to an example, the step of setting initial conditions of the system comprises defining a set of key variables related to an initial state of the system.

According to an example, after defining the set of key variables, the step of setting initial conditions of the system comprises attributing at least one value to each variable of the set of key variables. According to an example, the quantum random number generation module comprises a plurality of qubits, the plurality of qubits comprising at least one of superconducting qubits or ions trapped qubits, and the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the quantum random number generation module comprises a plurality of qubits.

According to an example, the plurality of qubits comprises at least one of superconducting qubits or ions trapped qubits.

According to an example, the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the step of putting the set of qubits of the plurality of qubits into a uniform superposition state comprises using a set of Hadamard gates.

According to an example, the measurement module comprises at least one pulse emitter and at least one detector.

According to an example, the step of simulating the time evolution of the initial state of the system comprises using at least one of Monte Carlo and/or Geometric Brownian Motion approaches. According to an example, the present invention further comprises using of a Markov Chain Monte Carlo (MCMC) approach for simulating the time evolution of the initial state of the system. According to an example, the system is taken among at least one of:
a. A portfolio;
b. A Mechanical structure;
c. A parameter of the climatic system;
d. An image recognition system.

According to an example, the predetermined rules comprise ordering the final states based on their values.

According to an example, the step of simulating the time evolution of the initial state of the portfolio to obtain a plurality of final states of the portfolio comprises at least the following sub-steps:
a. Defining at least a plurality of parameters by:
   i. Setting at least an initial price S0 for at least one asset being simulated;
   ii. Defining at least one risk free rate r, preferably constant, configured to represent the opportunity cost of holding a risk-free asset;
   iii. Defining a volatility σ of the asset configured to represent the degree of price fluctuation;
   iv. Setting a time horizon T for the simulation;
   v. Defining a number N of steps corresponding to the number of time intervals to calculate the simulation at regular intervals;
   vi. Selecting a number M of simulations corresponding to the number of independent paths to simulate;

This plurality of parameters is configured to mathematically simulate the evolution of the price of the asset according to the following stochastic differential first equation: dSt = St * (r*dt + *σ* * dWt) where Wt represents random shocks through a Wiener process, and the following second equation: S_{t+Δt} = St * exp((r - 0.5*σ*₂) Δt + σΔt^{1/2}Z) configured to discretize the first equation to simulate changes over predetermined time intervals Δt, and where Z is a standard normal random variable, introducing randomness at each time step using the set of quantum-generated random number;
a. Generating M Random Paths, each random path representing a unique possible outcome of the price's evolution, and for each generation of a random path:
   i. Starting from the initial price S₀;
   ii. Iterating over N time steps.
   iii. At each step, generating a new random value Z using at least one quantum-generated random number from the set of quantum-generated random numbers,
   iv. Applying the new random value Z to the second equation to calculate an updated price St;
   v. Recording the updated price St at each interval until reaching the end of the time horizon T.
b. Calculating average values and/or other statistical measures across all random paths at predetermined points in time over the time horizon T.

According to an embodiment, the present invention further comprises aggregating at least a plurality of results across the different random paths to obtain probabilistic data, said probabilistic data comprising at least one among: an average final price, a variance, or probabilities of certain price thresholds.

In the context of the present invention, "manifold of n dimensions" may refer to a topological space of n dimensions that is locally Euclidean. More specifically, each point in a manifold has a neighborhood that is homeomorphic to an open set in Euclidean space. This property allows for the use of techniques from Euclidean geometry and calculus when analyzing manifolds. The dimension of a manifold is the number of coordinates required to specify a point within it, which can be any integer greater than or equal to zero.

In the context of the present invention, "image classification" may refer to categorization and labeling of different groups of images.

In the context of the present specification, a "server" is a computer program that is running on appropriate hardware and is capable of receiving requests (e.g., from devices) over a network, and carrying out those requests, or causing those requests to be carried out. The hardware may be one physical computer or one physical computer system, but neither is required to be the case with respect to the present invention. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server". [02] In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the modules, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.
In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system
In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.
In the context of the present specification, the expression "component" or "module" is meant to include software (appropriate to a particular hardware context) that is both necessary and sufficient to achieve the specific function(s) being referenced.
In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc. The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general purpose processor, such as a central processing unit (CPU), also called a classical processing unit, or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.
Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities. Implementations of the present invention each have at least one of the above-mentioned object and/or aspects, but do not necessarily have all of them. It should be understood that some aspects of the present invention that have resulted from attempting to attain the above-mentioned object may not satisfy this object and/or may satisfy other objects not specifically recited herein.
In the present description, the words "data", "piece of information" and "information" can be used for the same purpose, i.e. one data can be or comprise information or a piece of information, and a piece of information can be or comprise data.
In the present description, one module can comprise several modules, one module can be formed of several modules. For example, the quantum channel module can comprise several other modules and quantum channels.
According to an embodiment, the present invention can be configured to cooperate with at least one input module including one or more user interface devices such as a keyboard, pointer, number pad, or touch screen.
According to an embodiment, the classical information processing module comprises at least one processor. In the present description, a processor may be any logic processing unit, such as one or more digital processors, microprocessors, central processing units, graphics processing units, application-specific integrated circuits, programmable gate arrays, programmed logic units, digital signal processors, network processors, and the like.
In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.
In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.
Classical data can include processor-executable instructions that, when executed by a processor, cause the processor to control, initialize, write to, manipulate, read out, and/or otherwise send data to/from a quantum module.
Classical data can include data used or obtained by the operation of the present invention. Classical data can include data associated with, e.g., created by, referred to, changed by, a processor executing processor-executable instructions, such as, control instructions.
Quantum data or quantum information can comprise one or more qubits. A qubit or quantum bit is a logical building block of a quantum computer comparable to a binary digit in a classical digital computer. A qubit conventionally is a defined physical system having two or more discrete states called computational states or basis states. Basis states logically are analogous to binary states. These states may be labeled |0> and |1>.
As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.
Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.
In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations. In some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.
In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.
As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".
Additional and/or alternative features, aspects and advantages of implementations of the present invention will become apparent from the following description, the accompanying drawings and the appended claims.

### BRIEF DESCRIPTION OF THE DRAWINGS

For a better understanding of the present invention, as well as other aspects and further features thereof, reference is made to the following description which is to be used in conjunction with the accompanying drawings, where:
FIG. 1 illustrates a flowchart of a method (100) according to an embodiment of the present invention.
FIG. 2 illustrates a schematic representation of a specific embodiment of the presented invention;
FIG. 3 illustrates a distribution of final states according to an embodiment of the present invention;
FIG. 4 illustrates the step-by-step process of a Quantum Random Number Generator according to an embodiment of the present invention;
FIG. 5 illustrates a flowchart of Monte Carlo simulations according to an embodiment of the present invention; and
FIG. 6 illustrates the density distribution of Monte Carlo simulations for stock prices, highlighting the Value at Risk at a 99% confidence interval according to an embodiment of the present invention.

### DETAILED DESCRIPTION

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present invention may be of a greater complexity.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present invention.

According to an embodiment, the present invention describes a method for determining at least one threshold value in a system using both classical information processing and quantum random numbers generated through quantum processes. The method is designed to be implemented on a computer with both classical and quantum components, as described hereafter

According to an embodiment, this invention provides a novel approach for determining threshold values in complex systems by combining classical information processing techniques with quantum random number generation. The method takes advantage of the inherent unpredictability of quantum mechanics to generate truly random numbers that can be used to simulate and analyze the behavior of various systems.

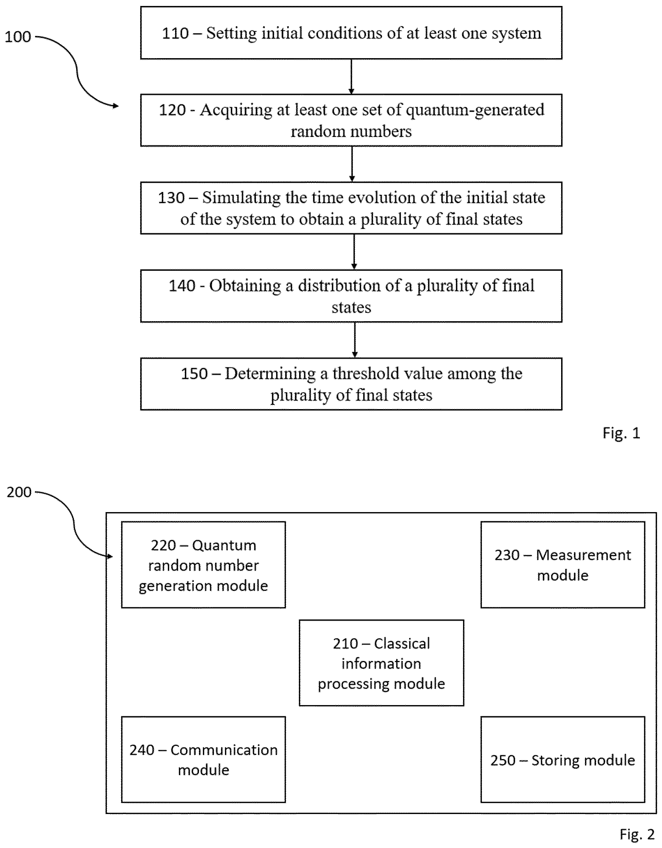

According to an embodiment, and as illustrated by figures 1, 2 and 3, the present invention relates to a method 100 for determining at least one threshold value among a plurality of states of at least one system. Preferably, said threshold value delimits a first set of states from a second set of states of the system, advantageously based on a given timeframe and/or on a given criterion.

According to an embodiment, the method 100 comprises at least:
a. Setting 110, using at least one processing module 210, initial conditions of at least one system;
b. Acquiring 120 at least one set of quantum-generated random numbers, using a communication module 240;
c. Simulating 130, using the processing module 210 and the set of quantum-generated random numbers, the time evolution of the initial state of the system to obtain at least one plurality of final states of the system,
d. Obtaining 140, using the classical information processing module 210, a distribution of a plurality of final states according to at least one first axis by organizing the plurality of final states based on predetermined rules, said distribution defining a global manifold of n dimensions, n being equal or greater than 1;
e. Determining 150, using the classical information processing module 210, at least one threshold value among the plurality of final states, said threshold value delimiting a first set of final states from a second set of final states.

According to an embodiment, the step of acquiring 120 the set of quantum-generated random numbers comprises:
a. Generating, using the classical information processing module 210 and at least one quantum random number generation module 220, a plurality of quantum-generated random numbers;
b. Selecting, using the processing module 210, a set of quantum-generated random numbers among the plurality of quantum-generated random numbers.

According to an embodiment, the step of generating the plurality of quantum-generated random numbers comprises at least:
a. Initiating at least one quantum process, using the classical information processing module 210 and the quantum random number generation module 220, said quantum random number generation module 220 comprising preferably at least one output configured to provide a stream of random data generated by the quantum process;
b. Measuring at least one stream of random data from said output of this quantum random number generation module 220 using a measurement module 230;
c. Post-processing, using the classical information processing module 210, the stream of random data to convert the stream of random data into at least one plurality of quantum-generated random numbers;
d. Storing the quantum-generated random numbers in at least one storing module 250.

According to an embodiment, the step of simulating 130 the time evolution of the initial state of the system to obtain at least one plurality of final states of the system comprises at least:
a. Partitioning the set of quantum-generated random numbers into a first predetermined number of subsets of quantum-generated random numbers, each subset of the predetermined number of subsets of quantum-generated random numbers comprising a second predetermined number of quantum-generated random numbers. Preferably, the first predetermined number is based on a first criterion, also called precision threshold, related to parameters of the simulating step. Advantageously, the second predetermined number is based on a second criterion related to the nature of the system.
b. For each subset of the predetermined number of subsets of quantum-generated random numbers, creating at least one trajectory of the evolution of the state of the system from its initial state to at least one final state over the given timeframe.

According to an embodiment, the step of determining 150 the threshold value comprises:
a. Setting a given criterion, for example a level of confidence;
b. Calculating a first manifold of n+1 dimension based on said given criterion under the manifold of n dimension, said first manifold corresponding to said first set of final states, said first manifold being a part of a global manifold of n+1 dimensions;
c. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
d. Computing the at least one threshold value on at least the first axis, this threshold value corresponding to at least one intersection of the first axis with the another manifold of n dimensions.

Therefore, according to an embodiment, the present invention can begin by setting initial conditions for the system using at least one classical information processing module 210, which may involve classical information processing techniques. Next, a set of quantum-generated random numbers is acquired by initiating a quantum process using the classical information processing module 210 and the quantum random number generation module 220, which may involve quantum information processing techniques. The quantum process generates a stream of random data, which is measured and post-processed to convert it into a usable form. The quantum-generated random numbers are then stored for use in the simulation.

Preferably, the set of quantum-generated random numbers is selected and used to simulate the time evolution of the initial state of the system. This can involve partitioning the set of random numbers into subsets, creating trajectories for each subset, and organizing the final states into a distribution based on predetermined rules. The distribution defines a global manifold of n dimensions, where n is equal or greater than 1.

Then, according to an embodiment, at least one threshold value is determined by setting the given criterion and calculating the first manifold of n+1 dimensions based on this criterion under the manifold of n dimensions. A second manifold is preferably defined to separate the first manifold from a second manifold of n+1 dimensions, forming the global manifold of n+1 dimensions. The threshold value is then advantageously computed as the intersection of the first axis with the second manifold of n dimensions.

The use of quantum random numbers in this context offers several potential advantages over classical methods. Quantum random numbers are truly random and cannot be predicted or manipulated. Additionally, the ability to simulate complex systems using quantum-generated random numbers could lead to more accurate and efficient threshold determination compared to classical methods.

In summary, this invention provides a method for determining threshold values in a system using both classical information processing and quantum random numbers generated through quantum processes. The method offers improved reliability, accuracy, and efficiency compared to classical methods, making it particularly useful in applications where precise threshold determination is essential. The present invention can be applied to various use cases, such as neural network threshold determination, mechanical structure stability analysis, image recognition systems, climate system analysis, and financial use cases like stock prediction and risk management.

Additionally, by combining the power of Monte Carlo simulations, as described hereafter, with the unpredictability of quantum random number generation, this invention offers improved accuracy, reliability, and efficiency compared to classical methods.

According to an embodiment, the value of 'n' is equal to 1. In this scenario, the plurality of final states is distributed in such a manner that they collectively define a curve. The first manifold, in this context, is shaped to form a surface under this defined curve. Furthermore, the another manifold is configured to define a line, preferably that intersect an axis, providing the threshold value.

According to an embodiment, the value of'n' can be equal to 2. In this embodiment, the distribution of these final states defines a surface. Advantageously, defining a surface from the distribution of final states allows for a more complex analysis and interpretation of the results obtained during the process. Furthermore, according to an embodiment, the first manifold defines a volume under this defined surface. The choice of using a first manifold in this manner provides a three-dimensional context to the data points represented by the final states. Preferably, the another manifold creates a surface.

According to an embodiment, a quantum process comprises transformations of at least one quantum state through a specific set of operations. Preferably these specific set of operations are carefully chosen and defined to ensure control over the quantum state being transformed. The selection of these operations is useful for achieving the desired outcome in the quantum process. Advantageously, this approach allows for the manipulation and control of quantum states in a controlled manner. Preferably, the specific set of operations is designed to minimize errors and maximize efficiency during the transformation process. This optimization ensures that the quantum state is transformed accurately. It should be noted that the choice of these specific set of operations can depend on various factors, including the type of quantum system being used, the desired outcome of the transformation, and the resources available for implementing the operations. In some embodiments, the transformation process may involve multiple stages, with each stage consisting of a different set of operations designed to bring about the overall transformation of the quantum state. This multi-stage approach can provide greater control over the transformation process and improve the accuracy of the final result. Advantageously, the specific set of operations used in the present invention can be tailored to suit the requirements of different applications or use cases, making it a versatile tool for harnessing the power of quantum mechanics.

According to an embodiment, the present invention can comprise performing a quantum coin flip process to generate the quantum-generated random numbers. Preferably, the present invention can use one qubit. This process simulates the tossing of a fair coin in classical computing, but with the unique properties of quantum mechanics, such as superposition and entanglement, being leveraged. According to another embodiment, the present invention can comprise using at least one quantum measurement process conducted on an entangled qubit system. The purpose of this quantum process is to obtain random outcomes from the probabilistic results produced.

According to an embodiment, the step of setting initial conditions of the system comprises defining a set of key variables related to an initial state of the system. Preferably, these key variables are chosen based on their relevance and significance in determining the behavior of the system at its initial state. The choice of these key variables may depend on the nature and characteristics of the system being studied or modeled. It is to be understood that the specific set of key variables defined may vary depending on the particular application of the present invention.

Preferably, the present invention comprises attributing at least one value to each variable of the set of key variables. This ensures that the system has a defined starting point for its operation and analysis. It should be noted that the values assigned to these variables can be static or dynamic, depending on the nature of the system and the requirements of the present invention.

According to an embodiment, the quantum random number generation module 220 can be specifically designed to use a plurality of qubits, which are quantum two-state systems capable of representing both 0 and 1 simultaneously in a superposition state.

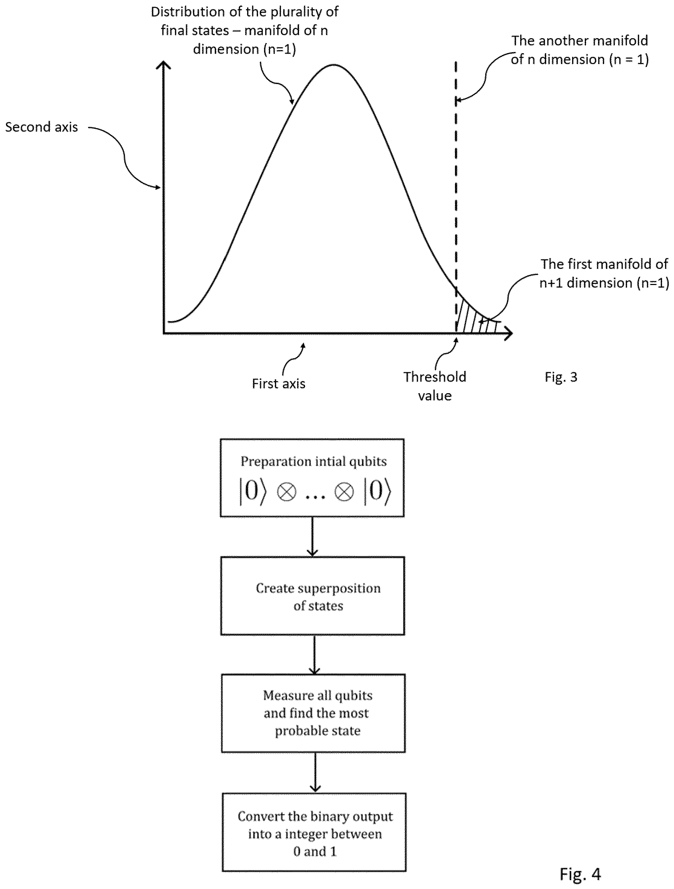

According to an embodiment, and as illustrated by figure 4, the present invention can comprise the following steps:
a. Initially, a plurality of qubits are utilized. Preferably, these qubits can be either superconducting qubits or ions trapped qubits, for example or any kind of qubits. The use of various kinds of qubits provides flexibility and versatility to the present invention.
b. In a subsequent step, quantum operations are performed on the plurality of qubits. These operations can include but are not limited to initialization, manipulation, measurement, and entanglement. The choice of qubit type may influence the specific quantum operations used due to their properties.
c. Advantageously, the present invention comprises the manipulation and measurement of quantum states in a controlled manner, enabling the execution of various quantum algorithms.

According to an embodiment, the present invention can be at least partially implemented in a quantum computing system, which may include additional components such as control electronics, cooling systems, and interconnects to facilitate the quantum operations. The specific design of the quantum computing system will depend on the chosen qubit type and the intended application, for example.

According to an embodiment, the present invention comprises a step of preparing a set of qubits in a uniform superposition state. This can be achieved by applying appropriate quantum operations to the qubits such that they exist in a linear combination of their possible states, for example. Then, preferably, each qubit from the set is measured using at least one measurement module 230. The measurement process collapses the superposition state of the qubit into one of its basis states, which can be represented as a binary value 0 or 1, for example. The measurements are then post-processed by converting the binary values into decimal values using classical information processing module 210. This conversion is necessary to obtain the final random numbers from the binary data obtained from the measurement process. Advantageously, the method can be repeated until a predetermined number of quantum-generated random numbers is reached. The repetition ensures that a sufficient number of random numbers are generated for various applications, for example. Advantageously, this method allows for the generation of truly random numbers using quantum mechanics principles. The use of qubits in superposition states and their measurement provides an inherent randomness that cannot be achieved through classical methods alone.

Preferably, the classical information processing module 210 can be a computerized system or any other device capable of performing arithmetic operations on binary data. Additionally, the measurement module 230 can be photodetectors, superconducting quantum interference devices (SQUIDs), or any other suitable quantum sensors.

According to an embodiment, the present invention can comprise a specific step for putting the set of qubits from the plurality of qubits into a uniform superposition state, preferably using a set of Hadamard gates. Advantageously, the use of Hadamard gates ensures that each qubit in the set is evenly distributed across the possible states, thereby creating a uniform superposition state. Preferably, the Hadamard gates are applied to each qubit in the set sequentially, with the output of one gate serving as the input for the next. This process is repeated until all qubits have been transformed by a Hadamard gate.

It should be noted that while the use of Hadamard gates is preferred, alternative methods for creating a uniform superposition state may also be employed, provided they achieve the same result. The specific choice of method will depend on various factors such as the number of qubits, the available hardware, and the desired level of control over the superposition state.

In addition, it is important to ensure that the Hadamard gates are properly calibrated and aligned to minimize errors and maintain the integrity of the superposition state. This can be achieved through various techniques such as feedback control, error correction codes, or quantum error detection and correction methods.

According to an embodiment, the measurement module 230 comprises at least one pulse emitter and at least one detector. Preferably, the pulse emitter serves to emit pulses of energy, which can be electromagnetic, magnetic, or any other suitable form, for the purpose of measurement. The detector, on the other hand, is advantageously designed to receive and process signals resulting from the interaction between the emitted pulses and the qubit(s) under measurement.

Preferably, the pulse emitter and the detector are strategically positioned within the measurement module 230 to ensure optimal interaction with the qubit(s) under measurement. This arrangement allows for precise and accurate measurements to be obtained. It is to be noted that the use of a single pulse emitter and detector configuration may suffice, but multiple configurations can also be employed for enhanced measurement capabilities. For instance, multiple pulse emitters can be used to cover a wider area or to provide more detailed measurements, while multiple detectors can help in improving the accuracy and reliability of the measurements by cross-verifying the data obtained from each detector.

According to an embodiment, the simulation process can be carried out using at least one of two distinct approaches: Monte Carlo or Geometric Brownian Motion.

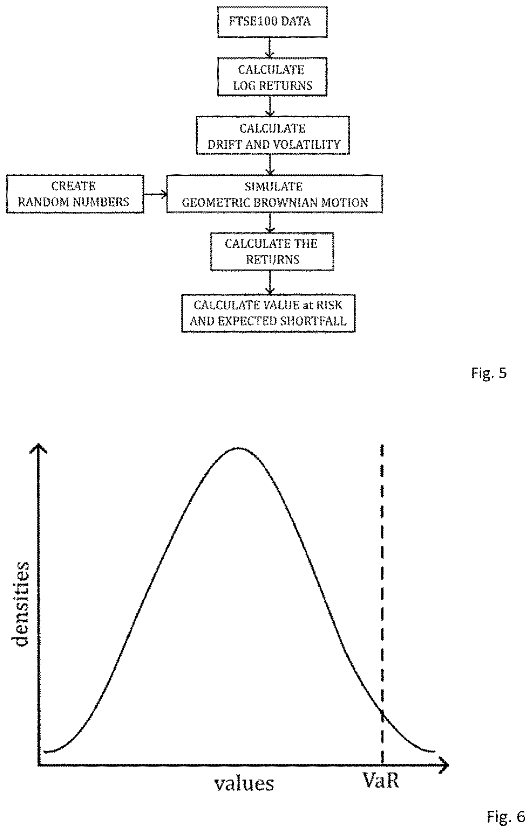

Preferably, the Monte Carlo approach involves using the quantum-generated random numbers to compute the probabilities of various outcomes in a given system. The results of these simulations can be represented graphically as densities of Monte Carlo simulations. For instance, Figure 6 illustrates such a graph, where the dashed line indicates the Value at Risk at the 99% confidence interval for an embodiment of the present invention discussed hereafter.

Advantageously, the Geometric Brownian Motion approach models the random movement of a quantity (such as a financial asset price) over time, using continuous-time stochastic calculus. This method is particularly useful in finance to describe the dynamics of stock prices and other assets that exhibit diffusion processes.

It should be noted that while both approaches can be used interchangeably depending on the specific requirements of the system being modeled, Monte Carlo simulations may provide a more intuitive understanding of the probabilities involved, whereas Geometric Brownian Motion offers a mathematically rigorous and continuous description of the time evolution of the system. These two approaches provide better results using quantum-generated random numbers than using pseudo-random numbers.

According to an embodiment, and as illustrated by figure 5, the step of simulating the time evolution of the initial state of the system can comprises at least the following sub-steps:
a. Defining at least a plurality of parameters by:
   i. Setting at least an initial value S₀ for at least one quantity of the system to be simulated; Preferably, the simulation is configured to simulate the evolution of the value of said quantity;
   ii. Defining at least one growth rate r configured to represent the expected tendency of change of the quantity being simulated over time; Said growth rate r is preferably constant; Advantageously, this growth rate r can be called "rate of drift";
   iii. Defining a volatility σ configured to represent the degree of fluctuation in the process; Preferably, this parameter introduces a variability to the value of the quantity over time;
   iv. Setting a time horizon T for the simulation; This defines the time window of the simulation;
   v. Defining a number N of steps corresponding to the number of time intervals to calculate the simulation at regular intervals;
   vi. Selecting a number M of simulations corresponding to the number of independent paths to simulate;
   These parameters are configured to mathematically simulate the evolution of the quantity according to the following stochastic differential first equation: dSt = St * (r*dt + *σ* * dWt) where Wt represents random shocks through the so-called Wiener process, and the following second equation: S_{t+Δt} = St * exp((r - 0.5σ²) Δt + σΔt^{1/2}*Z) configured to discretize the first equation to simulate changes over predetermined time intervals Δt, and where Z is a random variable, introducing randomness at each time step, preferably using the set of quantum-generated random number;
b. Generating M Random Paths, each random path representing a unique possible outcome of the quantity's evolution, and for each generation of a random path:
   i. Starting from the initial value S0;
   ii. Iterating over N time steps.
   iii. At each step, generating a new random value Z using at least one quantum-generated random number form the set of quantum-generated random numbers,
   iv. Applying the new random value Z to the second equation to calculate an updated value St;
   v. Recording the updated value St at each interval until reaching the end of the time horizon T.
c. Calculating average values and/or other statistical measures across all random paths at predetermined points in time over the time horizon T.

According to an embodiment, the present invention can further comprise computing the average values and/or other statistical measures across all random paths at predetermined points in time over the time horizon T. This allow to generate at least one probability distribution and/or at least one plurality of probabilities, each probability of the plurality of probabilities corresponding to a specific scenario. This allows estimation of expected outcomes, distributions, or probabilities of certain scenarios.

According to an embodiment, the present invention can further comprise aggregating at least a plurality of results across the different random paths to obtain probabilistic data, said probabilistic data comprising at least one among: a mean, a median, a variance, or probability distributions over time. This provides a probabilistic view of how the quantity may evolve, for example under the assumptions of Geometric Brownian Motion, which can be useful for prediction, estimation, and/or decision-making.

Figure 6 is included to demonstrate an embodiment of the present invention using Monte Carlo simulations. The graph shows the densities of these simulations with respect to values of the stock prices, with the dashed line indicating the Value at Risk at the 99% confidence interval. This figure serves as a visual representation of the results obtained from the simulation process according to an embodiment of the present invention. In this figure, n is equal to 1, therefore the distribution forms a curve as discussed hereabove.

In summary, this embodiment extends the method described in the preceding claims by providing two distinct approaches for simulating the time evolution of the initial state of a system: Monte Carlo and Geometric Brownian Motion. The choice between these methods depends on the specific requirements of the system being modeled, with each approach offering unique advantages in terms of understanding probabilities (Monte Carlo) or providing a mathematically rigorous description (Geometric Brownian Motion).

According to an embodiment, the present invention can employ a Markov Chain Monte Carlo (MCMC) approach for simulating the time evolution of the initial state of a system.

According to an embodiment, the system in question may be any physical or computational system whose behavior can be modeled and analyzed over time. Advantageously, the MCMC method is utilized due to its ability to efficiently explore complex, high-dimensional probability distributions, making it particularly suitable for simulating the time evolution of a system's initial state.

According to an embodiment, the MCMC approach involves generating a sequence of samples from the joint probability distribution of the system's variables at different time points. This is achieved by iteratively proposing new states and accepting or rejecting them based on a Metropolis-Hastings criterion.

Preferably, the initial state of the system is represented as a set of values for its variables, which may include position, velocity, temperature, electrical charge, or any other relevant parameters depending on the considered system.

Advantageously, by simulating the time evolution of the initial state using the MCMC approach combined with the set of quantum-generated random numbers, it is possible to predict the future behavior of the system and gain insights into its underlying dynamics. This can be particularly useful in fields such as physics, engineering, computer science, and data analysis.

The present invention offers a powerful tool for simulating complex systems over time, leveraging the efficiency and versatility of the MCMC approach combined with quantum-generated random numbers.

According to an embodiment, the present invention utilizes predetermined rules for ordering final states based on their values. As previously described, the present invention comprises obtaining a set of final states resulting from a given process or operation. Advantageously, these final states are quantifiable and can be assigned numerical values. Preferably, the predetermined rules for ordering the final states are established prior to the execution of the method. For example, these rules are based on a comparison of the numerical values assigned to each final state. The rules may dictate that the final states be ordered in ascending or descending order, depending on the specific requirements of the application. In some instances, it may be advantageous to use multiple sets of predetermined rules for different scenarios or applications. It is also within the scope of this invention to allow for the dynamic adjustment of these rules based on real-time data or feedback from the system.

It is useful to note that the specific implementation details of the present invention may vary depending on the context in which it is applied. For example, in a computerized system, the final states could represent different computational outcomes, while in a mechanical system, they might represent various operational states. The flexibility and adaptability of this method make it applicable to a wide range of fields and industries.

Furthermore, the present invention can be combined with other techniques or algorithms to enhance its functionality and utility.

According to an embodiment, the present invention relates to a computerized system configured for determining at least one threshold value among various states of a given system. This threshold value serves to distinguish a first set of final states from a second set of final states according to a specified timeframe and criterion.

Preferably, and as illustrated by figure 2, the computerized system comprises classical information processing 210 and quantum random number generation 220 modules.

According to an embodiment, the classical information processing module 210 is configured to:
a. Set the initial conditions for the system.
b. Cooperate with the quantum random number generation module 220 to generate a plurality of quantum-generated random numbers. This is achieved by initiating at least one quantum process, post-processing the stream of random data generated from this process, and selecting a set of these quantum-generated random numbers.
c. Simulate the time evolution of the system's initial state using the selected set of quantum-generated random numbers over a given timeframe. This is done by partitioning the set into a predetermined number of subsets, each containing a second predetermined number of quantum-generated random numbers. The first predetermined number is based on a precision threshold related to at least one parameter of the simulating step, while the second predetermined number is based on a criterion related to the nature of the system.
d. For each subset, create at least one trajectory of the evolution of the state of the system from its initial state to at least one final state over the given timeframe.
e. Obtain a distribution of final states according to at least one first axis, which defines a global manifold of n dimensions (n being equal or greater than 1). This is achieved by organizing the plurality of final states based on predetermined rules.
f. Determine at least one threshold value among the plurality of final states, which delimits a first set of final states from a second set of final states. This is done by setting a given criterion and calculating a first manifold of n+1 dimensions based on this criterion within the n-dimensional manifold. Another n-dimensional manifold is defined to separate the first manifold from a second manifold, forming a global manifold of n+1 dimensions. The threshold value is then computed on at least the first axis, which corresponds to at least one intersection of the first axis with the another n-dimensional manifold.

According to an embodiment, the quantum random number generation module 220 is configured to cooperate with the classical information processing module 210 to generate the plurality of quantum-generated random numbers.

According to an embodiment, the computerized system further comprises:
a. the measurement module 230 that measures at least one stream of random data from the output of the quantum module.
b. The communication module 240 that acquires the set of quantum-generated random numbers.
c. the storage module 250 that stores these quantum-generated random numbers.

According to an embodiment, the present invention can be applied in various technical fields, such as, for example:
a. A portfolio, such as a collection of financial assets or intellectual property rights.
b. A mechanical structure, including but not limited to machines, devices, or constructions designed for specific functions.
c. A parameter of the climatic system, like temperature, humidity, pressure, or wind speed and direction.
d. An image recognition system, which is capable of identifying, processing, and analyzing visual data.

Advantageously, the present invention can be easily modified to incorporate different systems as needed, allowing for flexibility and scalability in various applications.

According to an embodiment, the present application discloses a method for improving the performance of a neural network in determining a threshold value based on a given criterion of confidence level. Preferably, the system employed in this method is preferably a neural network. Advantageously, the criterion can be a level of confidence. According to an embodiment, in the step of determining the threshold value, the following steps can be performed:
a. A set of input-output pairs can be generated based on the plurality of final states, the initial state and the threshold value. Here, the input represents for example the initial state of the system, while the output corresponds to the final state that falls either side of the threshold value;
b. Another set of quantum-generated random numbers can be used to introduce noise into the input-output pairs, resulting in a perturbed dataset.

According to an embodiment, the neural network can be then trained using both the perturbed dataset and the original dataset, with the objective of minimizing the error between the neural network's output and the desired output for both datasets. Notably, the desired output corresponds to the threshold value. The performance of the trained neural network can be evaluated on a test dataset to assess its ability to generalize to new data, for example.

The technical advantages of this method lie in its ability to enhance the robustness and accuracy of the neural network by introducing noise into the training data, thereby improving its ability to handle real-world scenarios with inherent uncertainties. This approach can be particularly beneficial in applications where high confidence levels are required for decision-making processes.

According to an embodiment, the present application can be used for evaluating the safety margin of a mechanical structure. For example, the system under consideration can be a mechanical structure. The given criterion for evaluation is preferably a safety margin. The first set of final states corresponds for example to the mechanical structure remaining stable under various conditions, while, for example the second set of final states corresponds to the mechanical structure breaking under various conditions. In this embodiment, the threshold value can serve as a benchmark for determining whether the mechanical structure is safe or not, based on the safety margin. Advantageously, this method ensures a comprehensive assessment of the mechanical structure's safety by considering its behavior under multiple conditions and comparing it to a predefined standard, for example. This approach can help in identifying potential weaknesses and improving the design for enhanced safety. According to an embodiment, the present application can be configured for operating an image recognition system. The method can, for example, involves defining final states that correspond to output classes in the image recognition system. A threshold value is set to distinguish between a first set of output classes and a second set of output classes based on a given criterion, which can be the presence of a predetermined anomaly, for example. The determining step comprises evaluating the performance of the image recognition system using a separate test dataset to assess its ability to generalize to new data.

According to an embodiment, the image recognition system is employed in the present invention. This system can be designed to analyze and interpret images, classifying them into various categories or output classes.

According to an embodiment, the final states of the image recognition system can correspond to the output classes. These states can represent the classification results produced by the system upon analyzing an input image.

According to an embodiment, a threshold value is, for example, established to differentiate between two sets of output classes. This threshold value serves as a boundary that separates the first set from the second set based on the specified criterion, which is the presence of a predetermined anomaly in the image.

According to an embodiment, the determining step can involve assessing the performance of the image recognition system. Preferably, this evaluation is carried out using a separate test dataset to gauge the system's capacity to adapt and classify images effectively when presented with new, unseen data.

The technical advantages of this method lie in its ability to enhance the reliability and efficiency of the image recognition system by employing a threshold value to filter out anomalies and by testing the system's generalization capabilities using a separate test dataset. This approach ensures that the system is well-equipped to handle a wide range of images, improving its overall performance in real-world applications.

According to an embodiment, the present invention can be applied to a system integrated as a parameter within a climate system. For example, the given criterion in this context can be based on a predefined temperature threshold or a predefined rate of change in temperature.

According to an embodiment, the climate system may encompass various components such as weather stations, sensors, and control systems that monitor and regulate environmental conditions. Advantageously, integrating at least one system as a parameter within the climate system allows for more precise and efficient monitoring and control of the climate conditions.

Preferably, the predefined temperature threshold or rate of change in temperature serves as a benchmark to trigger specific actions or responses within the climate system, such as adjusting heating or cooling systems, activating alarms, or initiating preventive measures.

It is noted that the choice of the predefined temperature threshold or rate of change in temperature may depend on various factors, including the specific application and the desired level of precision and responsiveness within the climate system. For example, a higher temperature threshold might be appropriate for a greenhouse to maintain optimal growing conditions, while a lower threshold could be used in an industrial setting to prevent overheating and potential equipment damage.

In addition, it is important to emphasize that the present invention can be applied across various industries and applications where precise climate control is essential, such as agriculture, manufacturing, and energy production. Then, it should be noted that while this embodiment focuses on temperature-based thresholds, other physical or environmental parameters could also be used in similar ways to trigger actions within the climate system. For example, humidity levels, air pressure, or wind speed could serve as alternative criteria for determining threshold values.

According to an embodiment, the present invention can be configured to determine a value at risk, i.e. a level of loss based on a given probability and a given timeframe, for a given portfolio. According to an embodiment, the present invention relates to a method for determining a value at risk, i.e. a level of loss, preferably for a given portfolio, advantageously based on a given timeframe.

According to an embodiment, this method can comprise at least the following steps:
a. Setting initial conditions of at least one portfolio, using the classical processing unit 210; Preferably, the initial conditions can comprise a set of parameters taken among at least:
   i. For credit portfolio:
      1. Probability of default (PD) for each counterparty;
      2. Loss given default (LGD) for each counterparty;
      3. Exposure at default (EAD) for each counterparty;
      4. Losses based on multiplication of these 3 elements;
   ii. For equities or stocks:
      1. Number of shares held for each security;
      2. Current market price per share for each security;
      3. Historical price data (e.g., minimum, maximum, average) for each security;
      4. Volatility or standard deviation of price movements for each security;
      5. Dividend yield and payment schedule for each security;
      6. Bid-ask spread for each security;
      7. Market risk (systematic risk) for each security;
      8. Specific risk related to individual company factors for each security;
   iii. For derivatives:
      1. Type of derivative instrument (e.g., option, future, swap);
      2. Underlying asset or security;
      3. Strike price;
      4. Expiration date;
      5. Premium paid;
      6. Delta and gamma values;
      7. Implied volatility;
      8. Time to expiration;
      9. Interest rates;
      10. Dividend adjustments;
      11. Counterparty risk (PD, LGD, EAD);
      12. Market risk (systematic risk) for the derivative instrument.
b. Acquiring at least one set of quantum-generated random numbers, preferably using the communication module 240; This step can comprise:
   i. Generating, using the classical information processing module 210 and the quantum random number generation module 220, a plurality of quantum-generated random numbers; this generation step can comprise:
      1. Initiating at least one quantum process using the classical information processing module 210 and the quantum random number generation module 220, said quantum random number generation module 220 comprising at least one output configured to provide a stream of random data generated by the quantum process;
      2. Measuring at least one stream of random data from said output of this quantum random number generation module 220 using the measurement module 230;
      3. Post-processing, using the classical information processing module 210, the stream of random data to convert the stream of random data into plurality of quantum-generated random numbers;
      4. Storing the quantum-generated random numbers in at least one storing module 250;
   ii. Selecting, using the processing module 210, the set of quantum-generated random numbers;
c. Simulating, using the processing module 210 and the set of quantum-generated random numbers, the time evolution of the initial state of the portfolio to obtain a plurality of final states of the portfolio; this step can comprise:
   i. Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion (called precision threshold) related to parameters of the simulating step, the second predetermined number being based on a second criterion related to the nature of the system;
   ii. For each subset of the predetermined number of subsets of quantum-generated random numbers, creating at least one trajectory of the evolution of the state of the portfolio from its initial state to at least one final state over a given timeframe;
d. Obtaining, using the classical information processing module 210, a distribution of a plurality of final states according to at least one first axis, preferably by organizing the plurality of final states based on predetermined rules, said distribution defining a global manifold of n dimensions, n being equal or greater than 1;
e. Determining, using the classical information processing module 210, at least one value at risk among the plurality of final states, preferably said value at risk delimiting a first set of final states from a second set of final states; Advantageously, the determining step can comprise:
   i. Setting a given criterion (level of confidence);
   ii. Calculating a first manifold of n+1 dimension based on said given criterion under the manifold of n dimension, said first manifold corresponding to said first set of final states, said first manifold being a part of a global manifold of n+1 dimensions;
   iii. Defining another manifold of n dimension configured to separate the first manifold of n+1 dimension from a second manifold of n+1 dimensions, preferably the global manifold of n+1 dimensions being formed by at least the first manifold of n+1 dimension and the second manifold of n+1 dimensions;
   iv. Computing the at least one value at risk on at least the first axis, this value at risk corresponding advantageously to at least one intersection of the first axis with the another manifold of n dimensions.

According to an embodiment, the present invention can begin with setting initial conditions of the portfolio, which includes a set of parameters specific to the type of assets in the portfolio. For credit portfolios, these parameters may include Probability of default (PD) for each counterparty, Loss given default (LGD) for each counterparty, Exposure at default (EAD) for each counterparty, and losses based on multiplication of these three elements. For equities or stocks, the initial conditions may consist of the number of shares held for each security, current market price per share for each security, historical price data (e.g., minimum, maximum, average) for each security, volatility or standard deviation of price movements for each security, dividend yield and payment schedule for each security, bid-ask spread for each security, market risk (systematic risk) for each security, specific risk related to individual company factors for each security. For derivatives, the initial conditions may include the type of derivative instrument (e.g., option, future, swap), underlying asset or security, strike price, expiration date, premium paid, Delta and gamma values, implied volatility, time to expiration, interest rates, dividend adjustments, counterparty risk (PD, LGD, EAD), market risk (systematic risk) for the derivative instrument.

Preferably, the next step involves acquiring at least one set of quantum-generated random numbers. This process is initiated using the classical information processing module 210 and the quantum random number generation module 220. The quantum random number generation module 220 generates a stream of random data through a quantum process, which is measured and post-processed to convert it into a usable form. The quantum-generated random numbers are then stored for use in the simulation.

Advantageously, the set of quantum-generated random numbers is selected and used to simulate the time evolution of the initial state of the portfolio. This involves partitioning the set of random numbers into subsets, creating trajectories of the evolution of the portfolio using each subset, and organizing the final states into a distribution based on predetermined rules. The distribution defines a global manifold of n dimensions, where n is equal or greater than 1.

Preferably, the value at risk can be determined by setting a given criterion, i.e. a level of confidence, and calculating a first manifold of n+1 dimensions based on this criterion under the manifold of n dimensions. A second manifold is defined to separate the first manifold from a second manifold of n+1 dimensions, forming the global manifold of n+1 dimensions. The threshold value is then computed as the intersection of the first axis with the second manifold of n dimensions.

According to an embodiment, the present invention can be applied to a credit portfolio as an example use case. The initial conditions of the credit portfolio are set based on the parameters specific to credit portfolios, such as Probability of default (PD), Loss given default (LGD), Exposure at default (EAD), and losses based on multiplication of these three elements for each counterparty in the portfolio. A set of quantum-generated random numbers is acquired and used to simulate the time evolution of the credit portfolio under various scenarios, using a Monte-Carlo approach for example, with the final states organized into a distribution that defines a global manifold of n dimensions. The threshold value (value at risk) is determined by setting a given criterion (level of confidence) and computing the intersection of the first axis with the second manifold of n dimensions, which delimits a first set of final states from a second set of final states.

In the context of stock prediction and finance, the invention improves the accuracy of Monte Carlo predictions by introducing in a smart way quantum random number generation. The method uses a quantum random number generation module 220 to generate truly random numbers, which are then used in the Monte Carlo simulations, for stock price forecasting for example. This approach enhances the robustness of the solution by accounting for variability and uncertainty in the model parameters. According to an embodiment, the present invention provides a method for simulating Monte Carlo methods using quantum random sampling, which serves as a powerful tool for analyzing and predicting the behavior of complex systems. Consider the challenge of forecasting the future price of a stock, a task complicated by numerous uncertain variables. Analytical solutions to such problems may be infeasible or extremely difficult to derive due to the inherent complexity and randomness of financial markets. Instead, Monte Carlo methods provide an alternative approach by simulating the system multiple times, each time with randomly generated inputs. These simulations yield a range of potential outcomes that reflect the system's behavior under different scenarios.

According to an embodiment, in each iteration of a Monte Carlo simulation, quantum random inputs are sampled from predefined probability distributions. The drift and the volatility can be calculated from historical data.

For instance, stock returns may be modeled using a log-normal distribution using the drift and volatility, while other uncertain parameters might follow a uniform distribution or other appropriate statistical models. These inputs drive the computation of the outcome of interest, such as the stock's future price. By generating many simulations - often numbering in the thousands or millions - researchers can construct a comprehensive distribution of possible outcomes.

The aggregation of simulation results can take various forms, depending on the specific research goal. Commonly, researchers may calculate the mean or variance of the simulated outcomes, or estimate the probability of events occurring, such as the stock price exceeding a certain threshold. This aggregation provides insights into the central tendencies and the range of possible outcomes, enabling a more informed analysis of the system's behavior.

The reliability of Monte Carlo methods is underpinned by the law of large numbers, which posits that as the number of simulations increases, the aggregated results converge towards the true values of the system's characteristics. Consequently, more simulations generally lead to more accurate and robust estimates.

A Quantum Random Number Generator (QRNG) leverages the inherent unpredictability of quantum mechanics to produce truly random numbers. The process typically involves initializing a set of qubits, which are the basic units of quantum information, in a well-defined state - commonly the |0000〉 state, where all qubits are in the ground state. Once initialized, the qubits are subjected to quantum operations, such as applying a Hadamard gate, which places each qubit into a superposition of 10) and 11). This superposition means that each qubit simultaneously exists in both states, with equal probability before measurement.

When the qubits are measured, the superposition collapses, and each qubit randomly takes on a definite state of either 10) or 11). Due to the probabilistic nature of quantum measurement, the resulting state of the system is unpredictable and varies with each measurement. By repeatedly initializing the qubits, applying superposition, and measuring the outcomes, a sequence of binary numbers (composed of 0s and 1s) is generated. These binary numbers can then be mapped to a random number between 0 and 1 by interpreting the binary string as a fraction in base 2.

The most probable state, which may occur most often over many measurements, still does not overshadow the inherent randomness of individual measurements. By ensuring that the quantum system is isolated from external influences and carefully managing the measurement process, QRNGs can produce random numbers that are more unpredictable and less biased than those generated by classical methods. This randomness is useful for applications in cryptography, simulations, and any domain where high-quality random numbers are essential.

Value at Risk (VaR) is a key metric in financial risk management, providing a quantitative estimate of the potential loss in a portfolio's value over a specified period, given a certain confidence level. Calculating VaR using Monte Carlo simulation is a powerful and flexible approach, especially suited for portfolios with complex instruments and non-linear risk factors. Monte Carlo simulation involves generating many potential future scenarios based on the statistical properties of the portfolio's underlying assets, allowing for a detailed and robust estimate of potential losses.

In a Monte Carlo simulation for VaR calculation, the first step is preferably to model the risk factors that influence the portfolio's value, such as stock prices, interest rates, or volatility. These risk factors are typically modeled using probability distributions that reflect their historical behavior. For example, stock returns might be modeled using a normal distribution, while more complex assets may require custom distributions or stochastic processes. Once the risk factors are modeled, random values are drawn from these distributions to simulate potential future market conditions.

According to an embodiment, the simulation then computes the portfolio's value under each of these randomly generated scenarios, creating a distribution of potential portfolio values at the end of the specified time horizon. By analyzing this distribution, the VaR is determined as the value at which a certain percentage of the distribution lies below. For instance, in a 99% confidence level VaR calculation, the VaR is the portfolio value at the 1st percentile of the distribution. This value stands for the maximum expected loss over the specified period with 99% confidence.

According to an embodiment, the simulating step of the time evolution of the initial state of the portfolio can comprise:
a. Defining at least a plurality of parameters by:
   i. Setting at least an initial price S₀ for at least one asset being simulated;
   ii. Defining at least one risk-free rate r configured to represent the opportunity cost of holding a risk-free asset; Preferably, this risk-free rate r is constant; Advantageously, this risk-free rate r is a risk-free interest rate;
   iii. Defining a volatility σ of the asset configured to represent the degree of price fluctuation;
   iv. Setting a time horizon T for the simulation, preferably in years;
   v. Defining a number N of steps corresponding to the number of time intervals to calculate the simulation at regular intervals;
   vi. Selecting a number M of simulations corresponding to the number of independent paths to simulate, preferably corresponding to the number of Monte-Carlo paths;
   This plurality of parameters is configured to mathematically simulate the evolution of the price of the asset according to the following stochastic differential first equation: dSt = St * (r*dt + *σ* * dWt) where Wt represents random shocks through a Wiener process, and the following second equation: S_{t+Δt} = St * exp((r - 0.5σ²) Δt + σΔt^{1/2}Z) configured to discretize the first equation to simulate changes over predetermined time intervals, and where Z is a standard normal random variable, introducing randomness at each time step using the set of quantum-generated random number;
b. Generating M Random Paths, each random path representing a unique possible outcome of the price's evolution, and preferably for each generated random path:
   i. Starting from the initial price S₀;
   ii. Iterating over N time steps.
   iii. At each step, generating a new random value Z using at least one quantum-generated random number from the set of quantum-generated random numbers,
   iv. Applying the new random value Z to the second equation to calculate an updated price St;
   v. Recording the updated price St at each interval until reaching the end of the time horizon T.
c. Calculating average values and/or other statistical measures across all random paths at predetermined points in time over the time horizon T.

According to an embodiment, the present invention can further comprise aggregating at least a plurality of results across the different random paths to obtain probabilistic data, said probabilistic data preferably comprising at least one among: an average final price, a variance, or probabilities of certain price thresholds.

Monte Carlo simulation is particularly helpful because it can accommodate the complexities of modern portfolios, including non-linear instruments like options, and can capture the effects of tail risks that simpler models might overlook. The method's flexibility allows it to model correlations between different risk factors and to incorporate scenarios that reflect extreme market conditions. However, this approach is computationally intensive, requiring significant processing power and time, especially when modeling large portfolios or running simulations with a high number of iterations.

Despite its computational demands, Monte Carlo simulation for VaR calculation is highly regarded for its accuracy and adaptability. It offers a comprehensive view of risk by considering a wide range of possible outcomes, making it an essential tool for risk managers in financial institutions. By simulating numerous potential future states of the market, Monte Carlo-based VaR calculations offer a deep understanding of potential losses, helping firms to prepare for adverse market movements and to make informed decisions on capital allocation and risk mitigation strategies.

Modifications and improvements to the above-described implementations of the present invention may become apparent to those skilled in the art. The foregoing description is intended to be exemplary rather than limiting. The scope of the present invention is, therefore, intended to be limited solely by the scope of the appended claims.

## Claims

1. A method (100) for determining at least one threshold value among a plurality of states of at least one system, said threshold value delimiting a first set of states from a second set of states of the system based on a given timeframe and on a given criterion, the method being configured to be implemented by at least one computerized system (200) comprising at least one classical information processing module (210) and at least one quantum random number generation module (220), the method comprising:
a. Setting (110), using at least one processing module (210), initial conditions of at least one system;
b. Acquiring (120) at least one set of quantum-generated random numbers, using a communication module (240), by at least:
i. Generating, using the classical information processing module (210) and at least one quantum random number generation module (220), a plurality of quantum-generated random numbers, by at least:
• Initiating at least one quantum process using the classical information processing module (210) and the quantum random number generation module (220), said quantum random number generation module comprising at least one output configured to provide a stream of random data generated by the quantum process;
• Measuring at least one stream of random data from said output of this quantum random number generation module (220) using a measurement module (230);
• Post-processing, using the classical information processing module (210), the stream of random data to convert the stream of random data into plurality of quantum-generated random numbers;
• Storing the quantum-generated random numbers in at least one storing module (250);
ii. Selecting, using the processing module (210), the set of quantum-generated random numbers;
c. Simulating (130), using the processing module (210) and the set of quantum-generated random numbers, the time evolution of the initial state of the system to obtain at least one plurality of final states of the system, the simulating step comprising at least:
i. Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
ii. For each subset of the predetermined number of subsets of quantum-generated random numbers, creating at least one trajectory of the evolution of the state of the system from its initial state to at least one final state over a given timeframe;
d. Obtaining (140), using the classical information processing module (210), a distribution of a plurality of final states according to at least one first axis by organizing the plurality of final states based on predetermined rules, said distribution defining a global manifold of n dimensions, n being equal or greater than 1;
e. Determining (150), using the classical information processing module (210), at least one threshold value among the plurality of final states, said threshold value delimiting a first set of final states from a second set of final states, the determining step comprising:
i. Setting a given criterion;
ii. Calculating a first manifold of n+1 dimension based on said given criterion under the manifold of n dimension, said first manifold corresponding to said first set of final states, said first manifold being a part of a global manifold of n+1 dimensions;
iii. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
iv. Computing the at least one threshold value on at least the first axis, this threshold value corresponding to at least one intersection of the first axis with the another manifold of n dimensions.

2. The method (100) according to claim 1 wherein n is equal to 1, and wherein the distribution of the plurality of final states defines a curve and wherein the first manifold defines a surface under said curve, and wherein the another manifold defines a line.

3. The method (100) according to claim 1 wherein n is equal to 2, and wherein the distribution of the plurality of final states defines a surface and wherein the first manifold defines a volume under said surface, and wherein the another manifold defines a surface.

4. The method (100) according to any one of the previous claims wherein the step of simulating (130) the time evolution of the initial state of the system comprises at least the following sub-steps:
a. Defining at least a plurality of parameters by:
i. Setting at least an initial value S₀ for at least one quantity being simulated;
ii. Defining at least one growth rate r, preferably constant, configured to represent the expected tendency of change of the quantity being simulated over time;
iii. Defining a volatility σ configured to represent the degree of fluctuation in the process;
iv. Setting a time horizon T for the simulation;
v. Defining a number N of steps corresponding to the number of time intervals to calculate the simulation at regular intervals;
vi. Selecting a number M of simulations corresponding to the number of independent paths to simulate;
vii. This plurality of parameters are configured to mathematically simulate the evolution of the quantity according to the following stochastic differential first equation: dSt = St * (r*dt + *σ* * dWt) where Wt represents random shocks through a Wiener process, and the following second equation: S_{t+Δt} = St * exp((r - 0.5σ₂) Δt + σΔt^{1/2}Z) configured to discretize the first equation to simulate changes over predetermined time intervals Δt, and where Z is a standard normal random variable, introducing randomness at each time step using the set of quantum-generated random number;
b. Generating M Random Paths, each random path representing a unique possible outcome of the quantity's evolution, and for each generation of a random path:
i. Starting from the initial value S₀;
ii. Iterating over N time steps.
iii. At each step, generating a new random value Z using at least one quantum-generated random number form the set of quantum-generated random numbers,
iv. Applying the new random value Z to the second equation to calculate an updated value St;
v. Recording the updated value St at each interval until reaching the end of the time horizon T.
c. Calculating average values and/or other statistical measures across all random paths at predetermined points in time over the time horizon T.

5. The method (100) according to the previous claim comprising:
a. computing the average values and/or other statistical measures across all random paths at predetermined points in time over the time horizon T to generate at least one probability distribution and/or at least one plurality of probabilities, each probability of the plurality of probabilities corresponding to a specific scenario; and
b. aggregating at least a plurality of results across the different random paths to obtain probabilistic data, said probabilistic data comprising at least one among: a mean, a median, a variance, or probability distributions over time.

6. The method (100) according to any one of the previous claims wherein the system is a neural network, wherein the given criterion is a level of confidence and wherein the step of determining the threshold value comprises the following steps:
a. Generating a set of input-output pairs based on the plurality of final states and the threshold value, with the input being the initial state of the system and the output being the corresponding final state that falls on either side of the threshold value;
b. Using another set of quantum-generated random numbers to introduce noise into the input-output pairs, creating a perturbed dataset;
c. Training at least one neural network using the perturbed dataset and the original dataset, to minimize the error between the neural network's output and the desired output for both datasets, the desired output corresponding to the threshold value;
d. Evaluating the performance of the neural network on a test dataset to assess its ability to generalize to new data.

7. The method (100) according to any one of claims 1 to 5 wherein the system is a mechanical structure, wherein the given criterion is a safety margin, the first set of final states correspond to the mechanical structure remaining stable and wherein the determining step further comprises evaluating the structural stability of the mechanical structure under various loading conditions and comparing the results to the threshold value.

8. The method (100) according to any one of claims 1 to 5 wherein the system is an image recognition system, wherein the final states correspond to output classes in the image recognition system, wherein the threshold value delimits a first set of output classes from a second set of output classes based on a given criterion, the given criterion being the presence of a predetermined anomaly, and wherein the determining step comprises evaluating the performance of the image recognition system using a separate test dataset to assess its ability to generalize to new data.

9. The method (100) according to any one of the previous claims wherein the quantum process comprises a transformation of at least one quantum state through a specific set of operations, and wherein the quantum process is taken among at least:
a. Quantum coin flip process using at least one qubit;
b. Quantum measurement process on an entangled qubit system.

10. The method (100) according to any one of the previous claims wherein the step of setting initial conditions of the system comprises defining a set of key variables related to an initial state of the system, and attributing at least one value to each variable of the set of key variables.

11. The method (100) according to any one of the previous claims wherein the quantum random number generation module (220) comprises a plurality of qubits, the plurality of qubits comprising at least one of superconducting qubits or ions trapped qubits, and wherein the step of generating a plurality of quantum-generated random numbers comprises:
a. Putting a set of qubits of the plurality of qubits into a uniform superposition state;
b. Measuring the state of each qubit of the set of qubits using at least one measurement module (230), the state being measured as a binary value;
c. Post-processing the measurements by converting the binary value into a decimal value using the classical information processing module (210);
d. Repeating steps a to c until a predetermined number of quantum-generated random numbers is reached.

12. The method (100) according to any one of the previous claims wherein the system is taken among at least one of:
a. A portfolio;
b. A Mechanical structure;
c. A parameter of the climatic system;
d. An image recognition system.

13. A computer product program for determining at least one threshold value among a plurality of states of at least one system which, when executed by at least one processing unit, executes the method (100) according to any one of claims 1 to 12.

14. A non-transitory computer readable medium comprising at least one computer program product according to claim 13.

15. A computerized system (200) configured to determine at least one threshold value among a plurality of states of at least one system, said threshold value delimiting a first set of states from a second set of states of the system based on a given timeframe and on a given criterion, the computerized system (200) comprising at least:
a. A classical information processing module (210) configured to:
i. Set initial conditions of at least one system;
ii. Cooperate with at least one quantum random number generation module to generate a plurality of quantum-generated random numbers by:
• Initiating at least one quantum process
• Post-processing the stream of random data to convert the stream of random data into plurality of quantum-generated random numbers;
iii. Select a set of quantum-generated random numbers
iv. Simulate, using the set of quantum-generated random numbers, the time evolution of the initial state of the system to obtain at least one plurality of final states of the system, by:
• Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
• For each subset of the predetermined number of subsets of quantum-generated random numbers, creating at least one trajectory of the evolution of the state of the system from its initial state to at least one final state over a given timeframe
v. Obtain a distribution of a plurality of final states according to at least one first axis by organizing the plurality of final states based on predetermined rules, said distribution defining a global manifold of n dimensions, n being equal or greater than 1;
vi. Determine at least one threshold value among the plurality of final states, said threshold value delimiting a first set of final states from a second set of final states, by:
• Setting a given criterion;
• Calculating a first manifold of n+1 dimension based on said given criterion under the manifold of n dimension, said first manifold corresponding to said first set of final states, said first manifold being a part of a global manifold of n+1 dimensions;
• Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
• Computing the at least one threshold value on at least the first axis, this threshold value corresponding to at least one intersection of the first axis with the another manifold of n dimensions
b. The quantum random number generation module (220) configured to:
i. Cooperate with the classical information processing module to generate the plurality of quantum-generated random numbers by:
• Initiating the quantum process, the quantum module comprising at least one output configured to provide a stream of random data generated by the quantum process;
c. A measurement module (230) configured to:
i. Measure at least one stream of random data from the output of the quantum module;
d. A communication module (240) configured to:
i. Acquire the set of quantum-generated random numbers;
e. A storing module (250) configured to:
i. Store the quantum-generated random numbers.
